# EUROPEAN PATENT SPECIFICATION

(11) **EP 2 522 453 B1**
(45) Date of publication and mention of the grant of the patent: **31.05.2017**
(21) Application number: 12160744.4
(22) Date of filing: 22.03.2012
(51) Int. Cl.: B23K 9/173, B23K 9/29

(54) **Welding torch with two contact tips**
Schweißbrenner mit zwei Kontaktelemente
Torche de soudage avec deux pièces de contact

(30) Priority: 11.05.2011 JP 2011002581 U
(43) Date of publication of application: 14.11.2012
(73) Proprietor: Kabushiki Kaisha Kobe Seiko Sho (Kobe Steel, Ltd.), Kobe-shi, Hyogo 651-8585 (JP)
(72) Inventor: Yuan, Yimin, Fujisawa-shi, Kanagawa 251-0014 (JP); Suzuki, Reiichi, Fujisawa-shi, Kanagawa 251-0014 (JP); Yamazaki, Kei, Fujisawa-shi, Kanagawa 251-0014 (JP)
(74) Representative: O'Callaghan, Robert James

(56) References cited:
- JP-A- 2010 194 566
- US-A- 3 018 360
- US-A- 3 590 213
- US-A- 4 580 026
- US-A- 4 667 083

## Description

### BACKGROUND OF THE INVENTION

### 1. Field of the Invention

The present invention relates to a welding torch used for gas-shielded arc welding.

### 2. Description of the Related Art

Japanese Unexamined Patent Application Publication No. 10-328836 (Claims and FIGs. 1 and 2) discloses a welding torch of a gas-shielded arc welding apparatus in which a contact tip (hereinbelow, a "tip") that supplies electric current to a welding wire extending therethrough is provided at a distal end portion of a tip body (a "contact tip holder" in Japanese Unexamined Patent Application Publication No. 10-328836), which is removably attached to a torch body.

Conventionally, a welding wire is fed to a welding torch, passes through a torch body and a tip body, and is fed out of a tip: Electric current is supplied from a power source to the tip and the welding wire, whereby welding is performed. Because the tip is gradually worn away due to friction with the welding wire during the welding operation, the tip needs to be replaced depending on the amount of wear.

Once the tip is worn away, a gap is produced between the tip and the welding wire passing therethrough, resulting in poor contact between the tip and the welding wire. To solve the problem of poor contact, in the welding torch disclosed in Japanese Unexamined Patent Application Publication No. 10-328836 (Claims and FIGs. 1 and 2), the welding wire is urged in a direction perpendicular to the axial direction by a cushioning rubber spacer.

Furthermore, to solve the problem of poor contact, in a welding electrode disclosed in Japanese Unexamined Patent Application Publication No. 4-143077 (Claims and FIGs. 1 and 4), a tip (a "current supply device" in Japanese Unexamined Patent Application Publication No. 4-143077) is urged toward the axis by a contact control cylinder provided radially outward of a welding wire.

Furthermore, in a gas metal arc (GMA) welding method disclosed in Japanese Unexamined Patent Application Publication No. 2010-194566 (Claims and FIGs. 1 and 2), the amount of spatter is reduced during welding to achieve stable welding. Therein, pulsed electric current is allowed to flow between a contact electrode and a work piece, and constant electric current, i.e., electric current controlled at a constant level, is allowed to flow between the work piece and an additional contact electrode in contact with the welding wire. The additional contact electrode is in contact with the welding wire at a position closer to the work piece than the contact electrode.

The welding torch disclosed in Japanese Unexamined Patent Application Publication No. 10-328836 (Claims and FIGs. 1 and 2) can solve the problem of poor contact between the tip and the welding wire. However, when arc welding is performed with high electric current, the tip is heated by the resistance between the tip and the welding wire and is worn away quickly, increasing the tip-replacement frequency. Furthermore, increased tip-replacement frequency lowers the operation efficiency because the welding operation is often interrupted.

In the welding electrode disclosed in Japanese Unexamined Patent Application Publication No. 4-143077 (Claims and FIGs. 1 and 4), a plurality of current-supply-device segments are provided on the outer periphery of the welding wire, and the contact control cylinder and an urging roller for urging the current-supply-device segments are provided on the outer side of the current-supply-device segments. This configuration significantly increases the size of the welding torch in the width direction (a direction perpendicular to the axial direction). Furthermore, with such a large welding electrode, the welding area during welding is limited due to the presence of the contact control cylinder and the urging roller.

Although the GMA welding method disclosed in Japanese Unexamined Patent Application Publication No. 2010-194566 (Claims and FIGs. 1 and 2) suggests division of a current supply point, the method is not practical because no specific structure is disclosed therein, and support structures for the tips or the ease of replacement of the tips are not considered. More specifically, for example, from a method illustrated in FIG. 1 of Japanese Unexamined Patent Application Publication No. 2010-194566 , it seems that a lower current-supply tip 3 is integral with a tip body and is not replaceable. Such a configuration requires the whole unit to be disassembled when an upper current-supply tip 2 or the lower current-supply tip 3 is replaced due to inevitable wearing or adhesion to the wire, and is time and effort consuming. Accordingly, this method has little practical use. In addition, a method illustrated in FIG. 2 of Japanese Unexamined Patent Application Publication No. 2010-194566 does not disclose the details of how an electric current-supply tip 92 is supported at three positions, how it is supplied with electric current, or how it is replaced. Accordingly, this method is no longer just an idea.

US-A-3018360, on which the preamble of claim 1 is based, discloses an arc welding torch in which a contact tube by which welding current is supplied to the electrode forms part of an inner barrel assembly comprising a pair of concentric metal tubes, namely an outer tube and an inner tube. An electrode guide tube assembly includes an outer metal tube and an inner metal tube. These tubes are positioned within an outer barrel and surround the tubes of the inner barrel assembly and a tubular fitting is connected at the lower end. The outer metal tube and the outer barrel define an annular space for the transmission of a shielding gas to the nozzle of the torch. An electrically insulating sleeve is interposed between the inner surface of the inner metal tube and the outer surface of the outer tube of the inner barrel assembly. An elongated electrode guide tube is threadedly connected to the fitting and projects therebelow This electrode guide tube engages the electrode projecting from the contact member of the torch and holds it in a fixed position in the torch as it travels from the contact member toward the workpiece to which the fused electrode material is to be applied by means of the welding arc. The contact tube and the guide tube can be replaced in the inner barrel.

### SUMMARY OF THE INVENTION

The present invention has been made in view of these circumstances, and an object thereof is to provide a compact welding torch with reduced tip wear, reduced tip-replacement frequency, and improved tip-replacement efficiency. To solve the above-described problems, the present invention provides a welding torch comprising: a torch body having a wire path through which a welding wire can extend along an axis portion, a gas supply path through which gas from a gas source can be supplied, and a current supply path through which electric current from a power source can be supplied; a nozzle having a gas ejection port at a distal end portion thereof through which gas can be discharged, the torch body being mounted to a base end portion of the nozzle, the welding torch being suitable for discharging gas from the gas ejection port to weld a work piece using the welding wire; a first tip body provided inside the nozzle and electrically connected to the torch body, the welding wire, the gas, and the current being supplied to the first tip body through the torch body; a first tip provided at a distal end of the first tip body to supply the current having passed through the first tip body to the welding wire; an insulating bushing formed of an insulative material and disposed on an outer periphery of the first tip body inside the nozzle; a second tip body accommodating the first tip body with the insulating bushing interposed therebetween, the second tip body being supplied with electric current from the power source; and a second tip provided at a distal end of the second tip body to supply the current having passed through the second tip body to the welding wire, the first and second tips being configured so that the welding wire can extend through the first tip and be inserted through the second tip, wherein the first and second tips are axially arranged, in two stages, at a predetermined distance from each other and supply electric current to the welding wire, and wherein the second tip body comprises a distal-end portion and a base-end portion threadedly engaged with one another, the threaded engagement of the distal-end portion and the base-end portion being at the same axial position along the length of the welding torch as the first tip such that upon removal of the distal-end portion the first tip extends beyond the threaded engagement, thereby providing access to the first tip for replacement thereof.

With this configuration, the first and second tips are axially arranged, in two stages, at a predetermined distance from each other and supply electric current to the welding wire. By providing two current supply points in the axial direction, the current supplied to each of the first and second tips is reduced. Thus, the amount of heat generated by the tips, the amount of tip wear, and the tip-replacement frequency can be reduced, thereby improving the welding and tip-replacement efficiencies. At the same time, the size of the entire welding torch can be reduced.

Furthermore, it is preferable that the first tip body have a first hollow portion through which gas flowing out of the torch body flows and a first communication hole provided in an outer periphery of the first tip body so as to communicate with the first hollow portion, that the second tip body have a second hollow portion through which gas flowing out of the first communication hole flows and a second communication hole provided in an outer periphery of the second tip body so as to communicate with the second hollow portion, and that a third gas flow path communicating
with the second communication hole and the gas ejection port be defined between the outer periphery of the second tip body and an inner wall of the nozzle.

With this configuration, the gas supplied to the torch body flows from the first hollow portion in the first tip body to the second hollow portion in the second tip body through the first communication hole, and flows out of the second tip body through the second communication hole. Then, the gas flows through the third gas flow path between the outer periphery of the second tip body and the inner wall of the nozzle and is stably jetted toward the arc from the gas ejection port in the nozzle. Furthermore, as the gas flows through the first communication hole and the second communication hole, its flow rate and pressure increase due to the orifice effect. Thus, the force of the gas jetted from the gas ejection port in the nozzle can be increased.

Furthermore, it is preferable that the insulating bushing include a tubular portion to which a torch inner tube that supplies electric current to the first tip body is fitted, and an insulating tubular portion to which a bushing insertion portion formed at a base end portion of the second tip body is fitted, and that the insulating bushing be provided on the torch body.

With this configuration, because the insulating bushing provided on the torch body has the tubular portion to which the torch inner tube that supplies electric current to the first tip body is fitted, and the insulating tubular portion to which the bushing insertion portion of the second tip body is fitted, the first and second tip bodies can be provided in the torch body in such a manner that their base ends are insulated from each other.

Furthermore, it is preferable that the welding torch have a through-hole to which a ring-like insulating member formed of an insulative material is internally fitted from the outside of the nozzle, and an electric wire connected at one end to the power source and at the other end to the second tip body that is electrically connected to the welding wire via the second tip extend through the ring-like insulating member. With this configuration, because the electric wire connected to the power source and the second tip body that is electrically connected to the welding wire via the second tip extends through the ring-like insulating member internally fitted to the through-hole from the outside of the nozzle, electric current from the power source can be supplied to the welding wire from the outer periphery of the nozzle via the second tip body.

Furthermore, it is preferable that one or both of the first and second tips be connected to the power source via a variable resistor. With this configuration, because one or both of the first and second tips are connected to the power source via a variable resistor, the amount of electric current supplied from the power source to the welding wire via the first and second tips can be adjusted.

Furthermore, it is preferable that the first and second tips be supplied with electric current from different power sources. With this configuration, because the first and second tips are supplied with electric current from different power sources, the amounts of current supplied from the power sources to the first and second tips can be differentiated from each other.

Furthermore, it is preferable that the different power sources include at least one pulse power source, and, if both of the power sources are pulse power sources, pulsed electric current outputted from one power source be synchronized with the timing of pulsed electric current outputted from the other power source. With this configuration, because at least one of the power sources is a pulse power source that outputs pulsed electric current, and pulsed electric current outputted from one power source is synchronized with the timing of pulsed electric current outputted from the other power source, a stable welding current can be obtained.

Furthermore, it is preferable that the distance between the first and second tips can be adjusted by changing the lengths of the first and second tips or the lengths of the first and second tip bodies.

Furthermore, it is preferable that the distal end portion of the second tip body provided with the second tip be removably attached to the base end portion of the second tip body. With this configuration, because the distal end portion of the second tip body provided with the second tip is removably attached to the base end portion, the distal end portion can be attached to or removed from the base end portion.

In the welding torch of the present invention, the first and second tips are axially arranged, in two stages, at a predetermined distance from each other and supply electric current to the welding wire. By providing two current supply points in the axial direction, the amount of heat generated by the tips, the amount of tip wear, and the tip-replacement frequency can be reduced, thereby improving the welding and tip-replacement efficiencies. At the same time, the size of the entire welding torch can be reduced. Furthermore, with the welding torch of the present invention, the gas supplied to the torch body flows through the first hollow portion in the first tip body, the first communication hole, the second hollow portion in the second tip body, the second communication hole, the third gas flow path, and is jetted from the gas ejection port in the nozzle. As the gas flows through the first communication hole and the second communication hole, its flow rate and pressure increase due to the orifice effect. Thus, gas can be stably jetted from the gas ejection port.

Furthermore, with the welding torch of the present invention, by insulating the base end portions of the first and second tip bodies from each other with the insulating bushing, two tips can be disposed in the torch body. Furthermore, with the welding torch of the present invention, because electric current from the power source can be supplied from the outside of the nozzle to the welding wire via the second tip body, the electric current can be easily supplied to the two tips. Furthermore, with the welding torch of the present invention, because the total electric current outputted from the welding power source is shared by the first and second tips, the amount of current flowing through one tip is reduced. Thus, the resistance of the tips, the amount of heat generated by the tips, the amount of tip wear, and the tip-replacement frequency can be reduced, thereby increasing the welding operation efficiency.

Furthermore, with the welding torch of the present invention, because the first and second tips are each connected to the power source via a variable resistor, the amount of electric current supplied to the welding wire can be flexibly controlled according to each tip. Furthermore, with the welding torch of the present invention, because electric current is supplied to the first and second tips from different power sources, the amount of electric current supplied from each power source to the corresponding tip can be reduced to a level appropriate for that tip, thereby reducing the amount of tip wear. Furthermore, with the welding torch of the present invention, because at least one of the power sources is a pulse power source, and pulsed electric current from one power source is synchronized with the timing of pulsed electric current outputted from the other power source, it is possible to supply a stable welding current and maintain a constant arc length.

Furthermore, with the welding torch of the present invention, the axial distance between the first and second tips can be appropriately adjusted by changing the lengths of the first and second tips or the lengths of the tip bodies supporting the first and second tips. Furthermore, with the welding torch of the present invention, the distal end portion of the second tip body provided with the second tip is removably mounted to the base end portion. Thus, the first tip accommodated in the second tip body can be easily removed and replaced by removing the distal end portion.

### BRIEF DESCRIPTION OF THE DRAWINGS

FIG. 1 is a cross-sectional view of a relevant part of a welding torch of the present invention;
FIG. 2 is an electrical block diagram of the welding torch of the present invention;
FIG. 3 is a cross-sectional view of a relevant part of a welding torch according to a Comparative Example;
FIG. 4 is a bar chart showing the amounts of wear of tips of the welding torch of the present invention and the amount of wear of a tip of the welding torch of the Comparative Example, after 30 minutes since welding is started;
FIG. 5 is a line chart showing the relationship between the amount of wear and welding time with the welding torch of the present invention and that with the welding torch of the Comparative Example;
FIG. 6 is a line chart showing the relationship between the electric current and the amount of melting of the welding wire in the welding torch of the present invention and the welding torch of the Comparative Example;
FIG. 7 is an electrical block diagram showing a first modification of the welding torch of the present invention;
FIG. 8 is an electrical block diagram showing a third modification of the welding torch of the present invention; and
FIG. 9 is a schematic diagram showing an example of a welding torch not falling under the scope of the claims, showing the arrangement of a first tip and a second tip.

### DESCRIPTION OF THE PREFERRED EMBODIMENTS

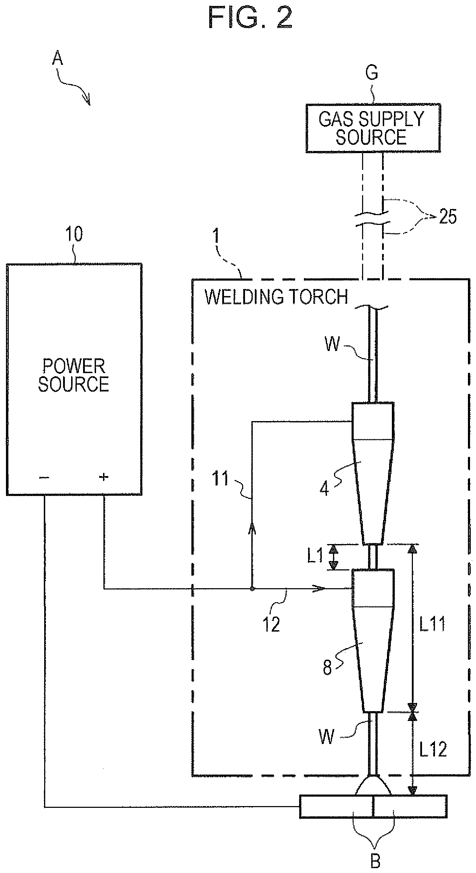

A welding torch according to an embodiment of the present invention will be described in detail below with reference to the drawings. Before describing a welding torch 1 of the present invention, a welding apparatus A in which the welding torch 1 is provided, a power source 10, and a gas source G will be described with reference to FIG. 2.

### Configuration of Welding Apparatus

The welding apparatus A shown in FIG. 2 is a gas-shielded arc welding apparatus in which a welding wire W is automatically delivered from a wire feeder (not shown) to the welding torch 1 when welding a work piece B. Arc welding is performed by supplying the welding wire W with welding current and shielding gas, composed of an inert gas such as argon gas, an active gas such as carbon dioxide or oxygen, or a mixture thereof, that covers arc and molten metal to prevent air from entering a welding atmosphere. The welding apparatus A mainly includes the welding torch 1, with which the work piece B is welded, the power source 10 that supplies electric current to the welding wire W, the wire feeder that feeds the welding wire W, and the gas source G that supplies the shielding gas to the welding torch 1.

### Configuration of Power Source and Gas Source

The power source 10 is, for example, a welding power source (welder) that supplies electric current to a first tip body 5 and a second tip body 7. The first tip body 5 and the second tip body 7 are connected to a positive electrode of the power source 10. A negative electrode of the power source 10 is connected to the work piece B. The gas source G is connected to the welding torch 1 via a pipe-like member 25.

### Configuration of Welding Torch

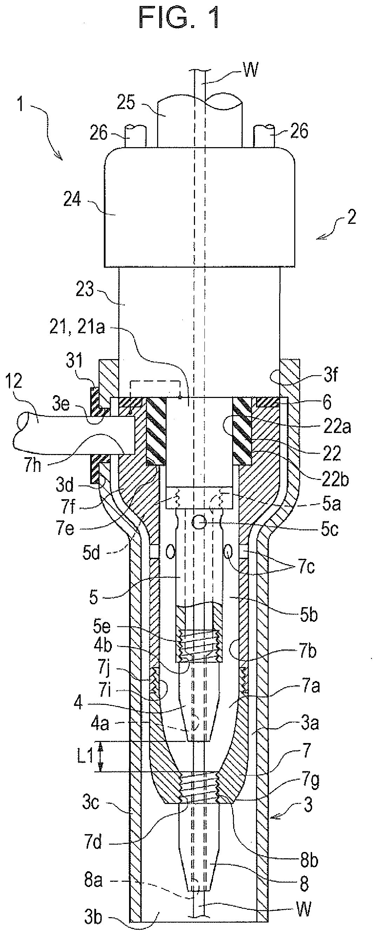

As shown in FIG. 1, the welding torch 1 supplies the welding wire W for welding the work piece B (see FIG. 2), welding current supplied to the welding wire W, and the shielding gas. The welding torch 1 is, for example, a water-cooled gas-shielded arc welding torch, and it discharges gas from a gas ejection port 3b provided at the distal end of the welding torch 1 against the work piece B and supplies electric current to the welding wire W to weld the work piece B. The welding torch 1 includes a torch body 2, a nozzle 3, a first tip 4, a second tip 8, the first tip body 5, and the second tip body 7, which will be described below. In the welding torch 1, two contact tips, namely, the first tip 4 and the second tip 8, are axially arranged, in two stages, at a predetermined distance L1.

### Configuration of Torch Body

The torch body 2 includes a conductive torch inner tube 21 serving as a current supply path 21a, an insulating bushing 22 externally fitted to the torch inner tube 21, a conductive torch outer tube 23 externally fitted to the insulating bushing 22, an insulative fixing tube 24 for fixing the torch inner tube 21 to the torch outer tube 23 with the insulating bushing 22 therebetween, and the insulative pipe-like member 25 fixed to the base end portion of the torch outer tube 23.

### Configuration of Torch Inner Tube

As shown in FIG. 1, the torch inner tube 21 includes a wire path (not shown) through which the welding wire W extends, a gas supply path (not shown) through which gas from the gas source G (see FIG. 2) is supplied, and the current supply path 21a through which electric current from the power source 10 (see FIG. 2) is supplied.

The wire path (not shown) is formed of a hollow-portion liner provided in the torch inner tube 21, and the welding wire W extends therethrough. The wire path also serves as the gas supply path (not shown), and a space around the welding wire W in the wire path constitutes the gas supply path. The current supply path 21a is the torch inner tube 21 composed of a conductive material. Electric current is supplied from the power source 10 to the current supply path 21a through an electric wire 11, and flows through the first tip body 5 and the first tip 4 to the welding wire W.

### Configuration of Insulating Bushing

The insulating bushing 22 is a substantially cylindrical member formed of an insulative material, such as resin. The insulating bushing 22 serves two functions: one is an insulating member that insulates the torch inner tube 21 electrically connected to the first tip 4 and the first tip body 5 from the second tip body 7 electrically connected to the second tip 8; and the other is a cooling member for cooling the torch body 2. The insulating bushing 22 is provided inside the nozzle 3, on the outer periphery of the first tip body 5. The insulating bushing 22 includes a tubular portion 22a to which the current supply path 21a, whose distal end is exposed, is fitted, an insulating tubular portion 22b internally fitted to a bushing insertion portion 7e provided at the base end portion of the second tip body 7, and a coolant circulating path (not shown) communicating with coolant circulating pipes 26 and through which coolant circulates.

The tubular portion 22a supports the cylindrical current supply path 21a internally fitted thereto. The insulating tubular portion 22b is a cylindrical portion formed on the outer periphery of the distal end portion of the insulating bushing 22, via which the second tip body 7 is externally fitted to the insulating bushing 22.

The coolant circulating path serves as a water jacket for cooling the torch body 2 heated by welding, by allowing coolant supplied from the coolant circulating pipes 26 to flow therein. The coolant circulating path is formed inside the insulating bushing 22 and torch outer tube 23.

### Configuration of Torch Outer Tube and Fixing Tube

As shown in FIG. 1, the torch outer tube 23 is a substantially cylindrical conductive member made of metal and has a bushing fixing screw (not shown) on the outer periphery of the base end thereof. The fixing tube 24 has a substantially cylindrical shape and is made of an insulative resin material. The fixing tube 24 has a nut (not shown) threaded onto the bushing fixing screw of the torch outer tube 23, and a coolant-supply inner flow path (not shown) serving as a water jacket that allows coolant to flow from a pair of pipe joints (not shown) connecting the coolant circulating pipes 26 to the insulating bushing 22 through the fixing tube 24. The pipe-like member 25 is a tubular member that serves as a guide pipe for guiding the welding wire W and a gas supply pipe that supplies gas. The pipe-like member 25 is connected at the base end to a wire feeder and the gas source G and at the distal end to the torch inner tube 21.

### Configuration of Nozzle

As shown in FIG. 1, the nozzle 3 is a substantially cylindrical member in which the first tip 4 and the second tip 8 are axially arranged, in stages, at the distance L1 from each other, and shielding gas is jetted from the gas ejection port 3b provided at the distal end. The nozzle 3 includes a third gas flow path 3a defined by the inner wall thereof, the gas ejection port 3b, a small-diameter portion 3c in which the gas ejection port 3b is provided, a large-diameter portion 3d formed continuous with the base end of the small-diameter portion 3c, a through-hole 3e provided in the large-diameter portion 3d, and a fitting portion 3f formed at the base end of the large-diameter portion 3d, to which the distal end of the torch outer tube 23 is internally fitted.

As shown in FIG. 1, the third gas flow path 3a is a flow path for the shielding gas, defined between the inner wall of the nozzle 3 and the outer periphery of the second tip body 7. The gas flows from second communication holes 7c toward the gas ejection port 3b. The second tip 8 is disposed inside the gas ejection port 3b. The small-diameter portion 3c is a cylindrical portion formed at the distal end of the nozzle 3, and a distal-end-side cylindrical portion 7g of the second tip body 7 supporting the second tip 8, the first tip body 5 supporting the first tip 4, and the welding wire W are disposed in the small-diameter portion 3c. On the other hand, the third gas flow path 3a, a base-end-side cylindrical portion 7f of the second tip body 7, an insulating ring 6, the insulating tubular portion 22b of the insulating bushing 22, and the current supply path 21a are disposed in the large-diameter portion 3d. A ring-like insulating member 31 made of an insulative material, through which an electric wire 12 is inserted, is internally fitted to the through-hole 3e. Note that the electric wire 12 does not necessarily have to penetrate through the nozzle, and it may be provided above the fitting portion 3f, more specifically, in or above the torch body 2. In such a case, the through-hole 3e and the ring-like insulating member 31 do not penetrate through the nozzle 3. The fitting portion 3f serves as a connecting portion for connecting the nozzle 3 to the torch outer tube 23.

### Configuration of First Tip

The first tip 4, formed of a substantially cylindrical conductive member, is a contact tip that is removably attached to the distal end of the first tip body 5, supports the welding wire W inserted therethrough, and supplies electric current having passed through the first tip body 5 to the welding wire W. The first tip 4 includes a wire insertion portion 4a that supports the welding wire W inserted therethrough and supplies current thereto, and a first-tip male screw 4b via which the first tip 4 is connected to the first tip body 5.

### Configuration of First Tip Body

The first tip body 5 is a conductive cylindrical member mounted, inside the nozzle 3, to the torch body 2 in an electrically conducting manner, and the welding wire W, gas, and electric current having passed through the torch body 2 is supplied to the first tip body 5. The first tip body 5 has a first gas flow path 5a through which gas flowing out of the torch body 2 flows, a first hollow portion 5b serving as the first gas flow path 5a, first communication holes 5c provided in the outer periphery of the first tip body 5 so as to communicate with the first hollow portion 5b, a first-tip-body male screw 5d onto which a torch-inner-tube female screw 21e is threaded, and a first-tip fixing screw 5e onto which the first-tip male screw 4b is threaded.

The first gas flow path 5a is a flow path through which gas supplied from the torch inner tube 21 flows toward the first communication holes 5c. The welding wire W is disposed along the axis portion of the first hollow portion 5b, and the gas flows therethrough. The first communication holes 5c having the same size are provided in the outer periphery of the first tip body 5 at equal intervals, through which the gas in the first gas flow path 5a flows into a second gas flow path 7a.

The first-tip-body male screw 5d formed on the outer periphery of the base end portion of the first tip body 5 is threaded into the torch-inner-tube female screw (not shown) of the torch inner tube 21, connecting the first tip body 5 to the distal end of the torch inner tube 21. The first-tip fixing screw 5e is a female screw formed on the inner wall of the distal end portion of the cylindrical first tip body 5, to which the first tip 4 can be removably fixed.

### Configuration of Second Tip

The second tip 8 is a contact tip that is removably supported at the distal end portion of the second tip body 7 and supplies current having passed through the second tip body 7 to the welding wire W. The welding wire W inserted through the first tip 4 passes through the second tip 8. For example, the second tip 8 is formed of a substantially cylindrical conductive member and has the same shape as the first tip 4. The second tip 8 includes a wire insertion portion 8a that supports the welding wire W inserted therethrough and supplies current thereto, and a second-tip male screw 8b via which the second tip 8 is connected to the second tip body 7. As shown in FIG. 2, the first tip 4 and the second tip 8 are arranged at the distance L1, which is adjustable in the axial direction, from each other and supply the current to the welding wire W. The distance between the second tip 8 and the work piece B, or a wire projection length, is L12.

As shown in FIG. 1, by replacing the first tip 4 and the second tip 8 with those having different lengths, or by replacing the first tip body 5 and the second tip body 7 with those having different lengths, the distance between the tips (the distance L1) can be adjusted.

### Configuration of Second Tip Body

As shown in FIG. 1, the second tip body 7 is a substantially cylindrical conductive member in which the first tip body 5 is disposed with the insulating bushing 22 therebetween and to which current is supplied through the electric wire 12. The second tip body 7 includes the second gas flow path 7a through which gas flowing out of the first communication holes 5c flows, a second hollow portion 7b constituting the second gas flow path 7a, the second communication holes 7c provided in the outer periphery of the second tip body 7 so as to communicate with the second hollow portion 7b, a second-tip fixing screw 7d onto which the second-tip male screw 8b of the second tip 8 is threaded, the bushing insertion portion 7e to which the insulating tubular portion 22b of the insulating bushing 22 is internally fitted, the base-end-side cylindrical portion 7f having a smaller diameter, a distal-end-side cylindrical portion 7g having a larger diameter than the base-end-side cylindrical portion 7f, an electric-wire connecting portion 7h to which the electric wire 12 is connected, and a base-end removable screw 7i and a distal-end removable screw 7j by which the distal-end-side cylindrical portion 7g can be removed from the base-end-side cylindrical portion 7f. The third gas flow path 3a communicating with the second communication holes 7c and the gas ejection port 3b is provided between the outer periphery of the second tip body 7 and the inner wall of the nozzle 3.

The second gas flow path 7a is a flow path through which gas having entered the second tip 8 from the inside of the first tip body 5 through the first communication holes 5c flows toward the second communication holes 7c. In the second hollow portion 7b, the welding wire W is disposed along the axis portion, and the gas flowing out of the first communication holes 5c flows toward the second communication holes 7c. The second communication holes 7c having the same size are provided in the outer periphery of the distal-end-side cylindrical portion 7g at equal intervals, so that the gas in the second gas flow path 7a flows into the third gas flow path 3a.

The second-tip fixing screw 7d is a female screw formed in a hole provided in the bottom (the distal end surface) of the substantially cylindrical second tip body 7 having a bottom. By threading the second-tip fixing screw 7d onto the second-tip male screw 8b of the second tip 8, the second tip 8 is fixed to the second tip body 7 in an electrically conducting manner.

The bushing insertion portion 7e is a cylindrical portion formed on the inner wall at the base end portion of the base-end-side cylindrical portion 7f. By inserting the insulating tubular portion 22b of the insulating bushing 22 into the bushing insertion portion 7e, the second tip body 7 is externally fitted to the insulating bushing 22 of the torch body 2. The bushing insertion portion 7e and the electric-wire connecting portion 7h are formed in the base-end-side cylindrical portion 7f. The current supply path 21a of the torch inner tube 21 and the welding wire W are disposed in the base-end-side cylindrical portion 7f via the insulating bushing 22, and the large-diameter portion 3d is disposed on the outer periphery of the base-end-side cylindrical portion 7f. Furthermore, the insulating ring 6 is disposed on the base end surface.

The distal-end-side cylindrical portion 7g having the second communication holes 7c and the second-tip fixing screw 7d is disposed in the small-diameter portion 3c with a space (the third gas flow path 3a) therebetween. The second tip body 7 may be an integrated component. The distal-end-side cylindrical portion 7g may have the base-end removable screw 7i and the distal-end removable screw 7j threaded with each other, so that the distal end portion can be removably attached to the base end portion to ease replacement of the first tip 4 disposed in the second tip body 7. Electric current is supplied through the electric wire 11 from the first tip body 5 via the first tip 4 to the welding wire W, and electric current is supplied through the electric wire 12 from the second tip body 7 via the second tip 8 to the welding wire W.

The base-end removable screw 7i is, for example, a female screw formed at the base end portion of the distal-end-side cylindrical portion 7g. The distal-end removable screw 7j is, for example, a male screw formed at the distal end of the distal-end-side cylindrical portion 7g, onto which the base-end removable screw 7i is threaded. That is, the second tip body 7 is configured such that the distal end portion having the second tip 8 can be removed from the base end portion, i.e., the second tip body 7 can be divided into two parts by removing the distal end portion, enabling the first tip 4 in the second tip body 7 to be easily replaced.

### Configuration of Ring-Like Insulating Member

As shown in FIG. 1, the ring-like insulating member 31 is a grommet insulating member internally fitted to the through-hole 3e provided in the outer periphery of the nozzle 3. The electric wire 12 extends through this ring-like insulating member 31, supplying electric current from the power source 10 to the welding wire W through the second tip body 7 and the second tip 8. Note that, when the electric wire 12 does not penetrate through the nozzle 3, more specifically, when the ring-like insulating member 31 is provided above the fitting portion 3f, for example, in the torch body 2 or above the torch body 2, the ring-like insulating member 31 may be attached to an appropriate position, not the nozzle 3. If insulation is not necessary, the ring-like insulating member 31 may be omitted.

### Configuration of Insulating Ring

The insulating ring 6 is a ring-like member disposed between the distal end surface of the torch outer tube 23 and the base end surface of the second tip body 7 to insulate them from each other.

### Operation of Welding Torch

Next, referring to FIGS. 1 to 6, the operation of the welding torch 1 will be described. As shown in FIG. 1, when welding is performed using the welding torch 1, the electric wire 11 extending from the power source 10 is connected to the first tip body 5, and the electric wire 12 extending from the power source 10 is connected to the electric-wire connecting portion 7h of the second tip body 7 through the ring-like insulating member 31 and the through-hole 3e in the nozzle 3. As shown in FIG. 2, the work piece B is connected to the power source 10.

When welding is performed, electric current is supplied through the electric wire 11 to the welding wire W, via the torch inner tube 21, the first tip body 5, and the first tip 4. Furthermore, electric current flows through the electric wire 12 from the welding wire W to the work piece B, via the second tip body 7 and the second tip 8, generating arc.

Then, as shown in FIG. 1, gas from the gas source G is supplied through the pipe-like member 25, the torch inner tube 21, the first gas flow path 5a of the first tip body 5, the first communication holes 5c, the second gas flow path 7a, the second communication holes 7c, and the third gas flow path 3a and is jetted from the gas ejection port 3b toward the arc, shielding the periphery of the arc with shielding gas composed of an inert gas such as argon gas, active gas such as carbon dioxide or oxygen, or a mixture thereof.

As shown in FIG. 2, in this case, two contact tips, namely, the first tip 4 and the second tip 8, are disposed in the welding torch 1 and are connected to the power source 10. Therefore, by making the first tip 4 and the second tip 8 share the current load in the present invention, the current load flowing through one tip can be reduced to, for example, half, compared with related art tips, in which electric current is supplied through a single tip. By supplying electric current to the welding wire W from the first tip 4 and the second tip 8 disposed at a distance from each other, the heat generated between the welding wire W and the first tip 4 and the second tip 8 is reduced. Thus, damage to the first tip 4 and the second tip 8 due to heat can be prevented.

As shown in FIG. 1, the heat generated by the first tip 4 and the second tip 8 is transmitted to the torch body 2 via the first tip body 5 and the second tip body 7. The torch body 2 is cooled by the coolant supplied from the coolant circulating pipes 26 and circulating through the fixing tube 24, the torch outer tube 23, and the coolant circulating path in the insulating bushing 22. Thus, the torch body 2 is prevented from being heated.

The distance L1 between the first tip 4 and the second tip 8 of the welding torch 1, assembled as shown in FIG. 1, can be flexibly adjusted by adjusting the sizes of the first tip 4 and the second tip 8 or the sizes of the first tip body 5 and the second tip body 7.

### First Modification

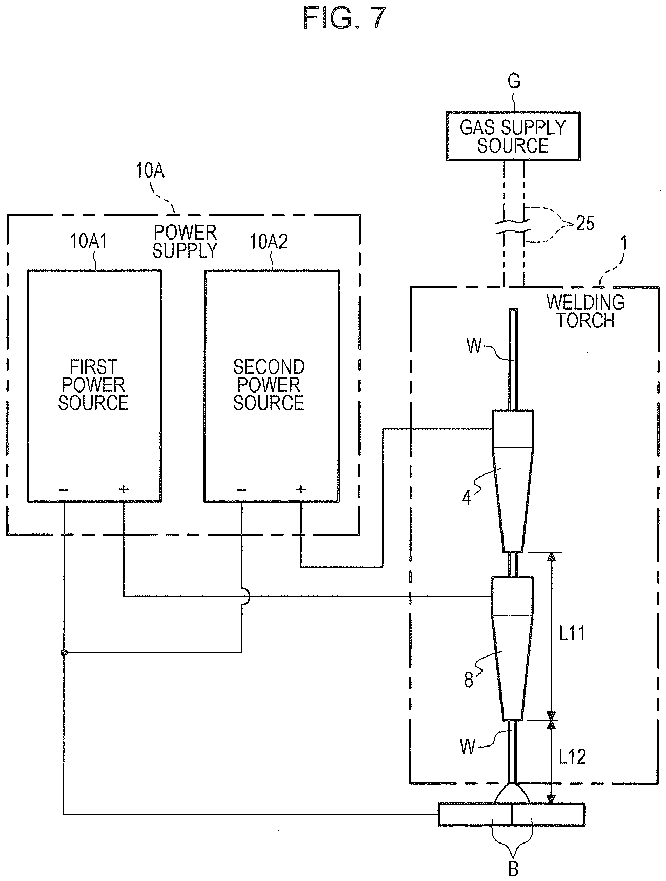

Although the embodiment of the present invention has been described above, the present invention is not limited to the above-described embodiment, and it may be appropriately modified within the scope of the appended claims. Note that the configurations already explained will be denoted by the same reference numerals, and the description for such configurations will be omitted. FIG. 7 is a block diagram showing a first modification of the welding torch according to the embodiment of the present invention.

In the embodiment described above, a configuration in which one power source 10 is used has been described, as shown in FIG. 2. However, the present invention is not limited to such a configuration. For example, as shown in FIG. 7, a power source 10A may include a plurality of power sources, namely, a first power source 10A1 and a second power source 10A2. The first tip 4 and the second tip 8 may be supplied with current from different power sources 10A, namely, the first power source 10A1 and the second power source 10A2. That is, the number of the power sources 10 is not limited to one; if two tips 4 and 8 are employed, two power sources may be used, and if three tips are employed, three power sources may be used.

### Second Modification

Furthermore, the power source 10A including the first power source 10A1 and the second power source 10A2, shown in FIG. 7, may be configured such that the first power source 10A1 is a pulse power source that supplies pulsed electric current to the welding wire W, and the pulsed electric current outputted from the first power source 10A1 may be synchronized with the timing of pulsed electric current outputted from the second power source 10A2.

### Third Modification

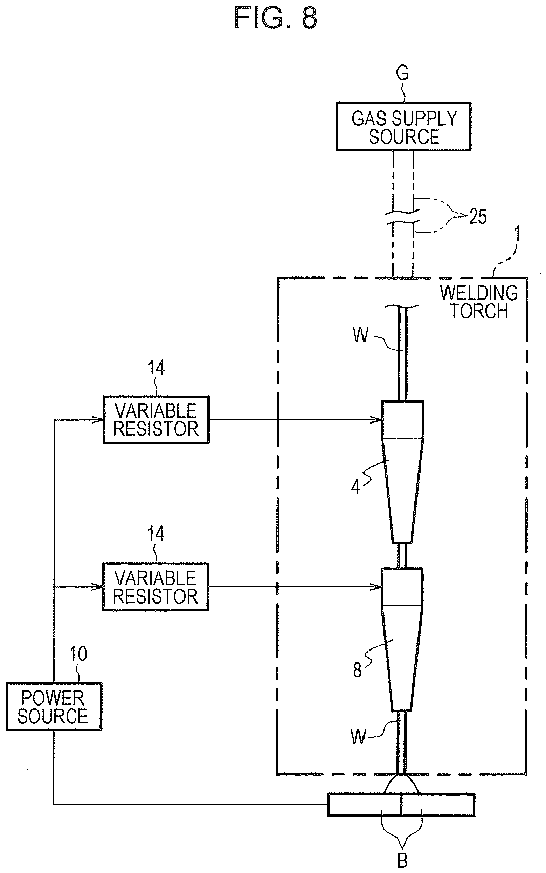

FIG. 8 is an electrical block diagram showing a third modification of the welding torch according to the embodiment of the present invention. As shown in FIG. 8, the first tip 4 and the second tip 8 may be connected to the power source 10 via variable resistors 14 and 14. With this configuration, electric current supplied from the power source 10 to the first tip 4 and the second tip 8 can be appropriately adjusted by the variable resistors 14 and 14. Example not falling under the scope of the claims. The axes of the first and second tips can be offset from each other by 2 mm or less. With this configuration, because the axes of the first and second tips are off set from each other by 2 mm or less, the welding wire is pressed against wire insertion portions of the tips. Thus, poor contact between the tips and the welding wire can be eliminated.

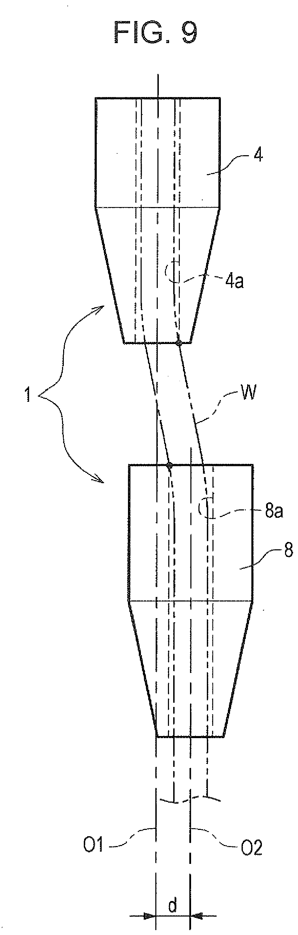

FIG. 9 is a schematic diagram showing such a welding torch, specifically showing the arrangement of the first tip 4 and the second tip 8. As shown in FIG. 9, the welding torch 1 may be configured such that the axis 01 of the first tip 4 and the axis 02 of the second tip 8 are offset from each other by a distance d, which is 2 mm or less. This configuration allows the welding wire W to be in contact with the wire insertion portion 4a of the first tip 4 and the wire insertion portion 8a of the second tip 8, eliminating poor contact between the welding wire W and the first tip 4 and the second tip 8. If the distance d is larger than 2 mm, the resistance generated during delivery of the welding wire W increases, inhibiting wire delivery or causing irregular wire delivery, thus resulting in unstable arc or poor welding.

### Other Modifications

Alternatively, the welding torch 1 may include an urging member including a spring that urges the welding wire W in a direction perpendicular to the axial direction, so that the axes 01 and 02 are offset from each other. By urging the welding wire W horizontally with the urging member, the poor contact between the welding wire W and the first tip 4 and the second tip 8 is eliminated.

Note that the first tip 4, serving as a current supply point when supplying electric current to the welding wire W, may be omitted if the electric current can be supplied to the welding wire W. For example, the first tip 4 and the first tip body 5 may be configured as a single component. In such a case, when a distal end hole in the first tip is worn away, the first tip 4 and the first tip body 5, configured as a single component, are replaced. In addition, the shape of the first tip 4 is not specifically limited as long as the current supply function is ensured. The shape of the first tip 4 may be, for example, a cylindrical shape or a polygonal cylindrical shape with a rectangular or polygonal cross section; it may be changed appropriately.

### Example

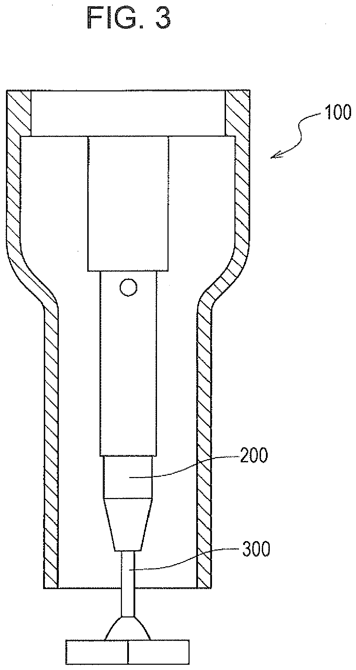

Next, referring mainly to FIGs. 3 to 7, the welding torch 1 according to an example of the present invention will be described in comparison with a welding torch 100 of a Comparative Example.

**[Table 1]**

| WELDING CONDITIONS | |
|---|---|
| DIAMETER OF WELDING WIRE | 1.4 mm |
| DISTANCE L11 BETWEEN FIRST TIP AND SECOND TIP | 55 mm |
| DISTANCE L12 BETWEEN SECOND TIP AND WORK PIECE | 25 mm |
| TYPE OF SHIELDING GAS | 80%Ar+20%CO₂ |
| WELDING SPEED | 100 cm/min |
| WIRE MELTING SPEED | 274 g/min |
| WELDING CURRENT | COMPARATIVE EXAMPLE: 555 A |
| | PRESENT INVENTION: TOTAL 500 A |
| WELDING POWER SOURCE | TWO CONSTANT-VOLTAGE POWER SOURCES |

Table 1 shows the "welding conditions" used in the research shown in FIGS. 3 to 7 is performed, including the diameter of the welding wire, the distance between the first tip and the second tip, the distance between the second tip and the work piece, the type of the shielding gas used, the welding speed, the wire melting speed, and the welding current. The power source and the current supply system used in the research are shown in FIG. 7. As shown in Table 1, the diameter of the welding wire W was 1.4 mm, the distance L11 between the first tip 4 and the second tip 8 was 55 mm, the distance L12 between the second tip 8 and the work piece B was 25 mm, the type of the shielding gas used was 80%Ar + 20%CO₂, the welding speed was 100 cm/min, and the wire melting speed was 274 g/min. These conditions are constant and common to the present invention and the Comparative Example. Results show that the welding current consumed in the Comparative Example was 555 A, and the total welding current supplied from the first and second power sources in the Example of the present invention was 500 A. Under these welding conditions, the welding torch 100 of the Comparative Example, shown in FIG. 3, and the welding torch 1 of the present invention, shown in FIG. 1, were compared with each other to confirm the effectiveness of the present invention.

### Amount of Wear and Welding Time of First and Second Tips

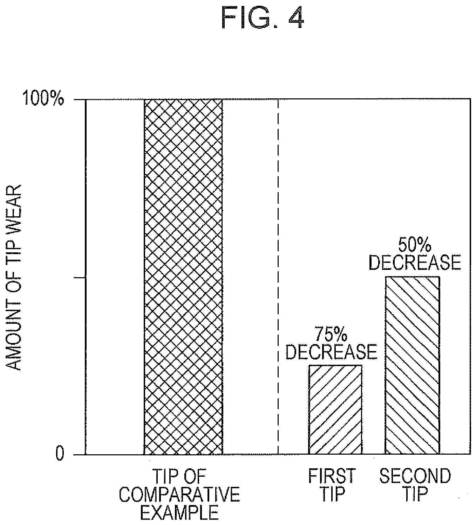

FIG. 4 is a bar chart showing the amounts of wear of the tips of the welding torch of the present invention and the amount of wear of the tip of the welding torch of the Comparative Example, after 30 minutes since welding is started.

As shown in FIG. 4, as a result of measuring the amount of wear of the first tip 4 after 30 minutes since welding using the welding torch 1 is started, the amount of wear of the first tip 4 was 25% of that of a tip 200 of the Comparative Example: that is, the amount of wear of the first tip 4 was 75% lower than that of the tip 200 of the Comparative Example. The amount of wear of the second tip 8 was 50% of that of the tip 200 of the Comparative Example: that is, the amount of wear of the first tip 4 was 50% lower than that of the tip 200 of the Comparative Example. From FIG. 4, it was confirmed that the amounts of wear of the first tip 4 and the second tip 8 of the welding torch 1 of the present invention are less than that of the tip 200 of the Comparative Example.

### Amount of Wear and Tip Replacement of First and Second Tips

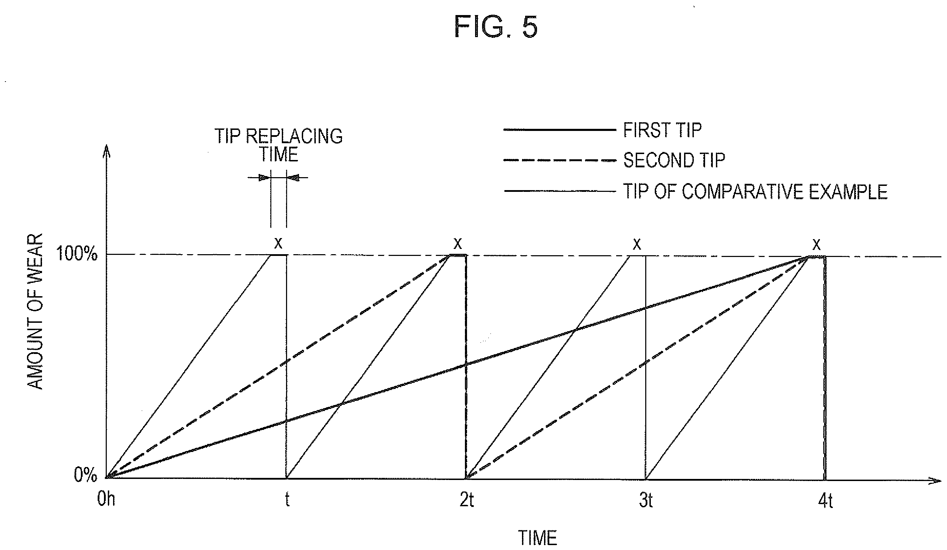

FIG. 5 is a line chart showing the relationship between the amounts of wear and welding time of the first tip 4 and the second tip 8 of the welding torch of the present invention; and the amount of wear and welding time of the tip 200 of the welding torch 100 of the Comparative Example.

As shown in FIG. 5, when welding is performed using the welding torch 100 of the Comparative Example (see FIG. 3), the tip 200 of the Comparative Example reached the amount of wear of 100%, at which the tip needs to be replaced, after about t - x hours from the start of welding, and the tip 200 was replaced. This first tip replacement was completed after t hours, and the welding was restarted. A second tip replacement was performed after about 2t - x hours from the start of welding, and a third tip replacement was performed after about 3t - x hours from the start of welding, and then a fourth tip replacement was performed after about 4t - x hours from the start of welding.

In contrast, when welding was performed using the welding torch 1 of the present invention, the first tip 4 reached the amount of wear of 100% after about 4t - x hours from the start of welding, and the first tip 4 was replaced (a first tip replacement). From FIG. 5, it was confirmed that the amount of wear of the first tip 4 of the present invention is less than that of the second tip 8, and is far less than that of the tip 200 of the Comparative Example, enabling drastic reduction in tip-replacement frequency and an efficient welding operation.

When welding was performed using the welding torch 1 of the present invention, the second tip 8 reached the amount of wear of 100% after about 2t - x hours from the start of welding, and the second tip 8 was replaced (a first tip replacement). Then, after about 4t - x hours from the start of welding, a second tip replacement was performed. From FIG. 5, it was confirmed that the amount of wear of the second tip 8 of the welding torch 1 of the present invention is less than that of the tip 200 of the Comparative Example, enabling drastic reduction in tip-replacement frequency.

As shown in FIG. 5, with the welding torch 100 of the Comparative Example, the tip 200 was replaced four times in 4t hours. In contrast, with the welding torch 1 of the present invention, the first tip 4 and the second tip 8 were replaced, in total, two times in 4t hours (only the second tip 8 was replaced in the first replacement, and the first tip 4 and the second tip 8 were replaced in the second replacement). Thus, the efficiency of the welding operation is improved.

### Amount of Melting of Welding Wire versus Electric Current

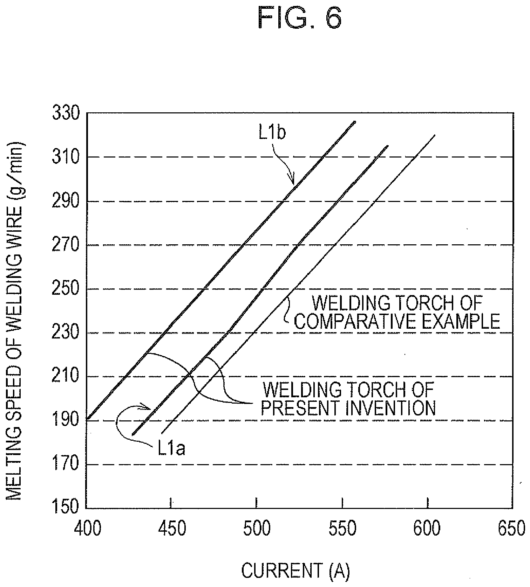

FIG. 6 is a line chart showing the relationship between the electric current and the amount of melting of the welding wire in the welding torch 1 of the present invention and the welding torch 100 of the Comparative Example having a single tip. In this line chart, a line L1a represents the data when the distance L1 between the first tip 4 and the second tip 8 of the welding torch 1 of the present invention was 5 mm, and a line L1b represents the data when the distance L1 between the first tip 4 and the second tip 8 was 15 mm. Welding was performed with high electric current, i.e., 400 A or more, at a melting speed of the welding wire W of about 190 to 315 [g/min].

As shown in FIG. 6, the current consumed when welding was performed at a melting speed of a welding wire 300 of 190 [g/min] using the welding torch 100 of the Comparative Example was about 450 A. In contrast, the current consumed when welding was performed using the welding torch 1 of the present invention, at the same melting speed, with the distance L1b of 15 mm, was about 400 A, which is lower than that of the Comparative Example.

The current consumed when the welding wire 300 was melted at a melting speed of about 230 [g/min] using the welding torch 100 of the Comparative Example was about 500 A. In contrast, the current consumed when welding was performed using the welding torch 1 of the present invention, at the same melting speed, with the distance L1b of 15 mm, was about 445 A, which is lower than that of the Comparative Example.

The current consumed when the welding wire 300 was melted at a melting speed of about 270 [g/min] using the welding torch 100 of the Comparative Example was about 550 A. In contrast, the current consumed when welding was performed using the welding torch 1 of the present invention, at the same melting speed, with the distance L1b of 15 mm, was about 495 A, which is lower than that of the Comparative Example.

The current consumed when the welding wire 300 was melted at a melting speed of about 315 [g/min] using the welding torch 100 of the Comparative Example was about 605 A. In contrast, the current consumed when welding was performed using the welding torch 1 of the present invention, at the same melting speed, with the distance L1b of 15 mm, was about 550 A, which is lower than that of the Comparative Example. From FIG. 6, it was confirmed that, compared with the welding torch 100 of the Comparative Example, the larger the distance L1 of the welding torch 1 of the present invention, the less electric current is required when welding is performed at the same melting speed. Thus, the electricity cost is reduced. If the same amount of electric current is to be consumed, the larger the distance L1, the higher the wire delivery speed. Thus, the efficiency is increased.

As has been described above, the welding torch 1 of the present invention has two current supply points, namely, the first tip 4 and the second tip 8, provided in a separated manner. Thus, the amount of electric current supplied to one current supply point is smaller than the welding torch 100 of the Comparative Example. Accordingly, the heat generated by the first tip 4 and the second tip 8 can be reduced, thereby reducing the frequency of the replacement of the first tip 4 and the second tip 8. Furthermore, a problem of unwanted fusion of the welding wire W and the first tip 4 and the second tip 8, which tends to occur when an excessive amount of electric current flows through the current supply point, can be solved because the electric current flowing through each current supply point, i.e., the first tip 4 or the second tip 8, is drastically reduced. Thus, the arc can be stabilized for a long term.

## Claims

1. A welding torch (1) comprising:
a torch body having a wire path through which a welding wire can extend along an axis portion, a gas supply path through which gas from a gas source can be supplied, and a current supply path through which electric current from a power source can be supplied;
a nozzle (3) having a gas ejection port (3b) at a distal end portion thereof through which gas can be discharged, the torch body being mounted to a base end portion of the nozzle, the welding torch being suitable for discharging gas from the gas ejection port to weld a work piece using the welding wire;
a first tip body (5) provided inside the nozzle (3) and electrically connected to the torch body, the welding wire, the gas, and the current being supplied to the first tip body through the torch body;
a first tip (4) provided at a distal end of the first tip body (5) to supply the current having passed through the first tip body to the welding wire;
an insulating bushing (22) formed of an insulative material and disposed on an outer periphery of the first tip body inside the nozzle;
a second tip body (7) accommodating the first tip body (5) with the insulating bushing (22) interposed therebetween, the second tip body (7) being supplied with electric current from the power source; and
a second tip (8) provided at a distal end of the second tip body to supply the current having passed through the second tip body to the welding wire, the first and second tips being configured so that the welding wire can extend through the first tip and be inserted through the second tip,
wherein the first and second tips are axially arranged, in two stages, at a predetermined distance from each other and supply electric current to the welding wire,
and wherein the second tip body comprises a distal-end portion and a base-end portion threadedly engaged with one another, **characterised in that** the threaded engagement (7i, 7j) of the distal-end portion and the base-end portion are at the same axial position along the length of the welding torch as the first tip such that upon removal of the distal-end portion the first tip extends beyond the threaded engagement, thereby providing access to the first tip for replacement thereof.

2. The welding torch according to Claim 1,
wherein the first tip body has a first hollow portion (5b) through which gas flowing out of the torch body flows and a first communication hole (5c) provided in an outer periphery of the first tip body so as to communicate with the first hollow portion,
wherein the second tip body has a second hollow portion (7b) through which gas flowing out of the first communication hole flows and a second communication hole (7c) provided in an outer periphery of the second tip body so as to communicate with the second hollow portion, and
wherein a third gas flow path (3a) communicating with the second communication hole and the gas ejection port is defined between the outer periphery of the second tip body and an inner wall of the nozzle.

3. The welding torch according to Claim 2,
wherein the insulating bushing (22) includes a tubular portion (22a) to which a torch inner tube that supplies electric current to the first tip body is fitted, and an insulating tubular portion (22b) to which a bushing insertion portion (7e) formed at a base end portion of the second tip body is fitted, and
wherein the insulating bushing is provided on the torch body.

4. The welding torch according to any one of Claims 1 to 3, the welding torch having a through-hole (3e) to which a ring-like insulating member (31) formed of an insulative material is internally fitted from the outside of the nozzle, the second tip body comprising an electric-wire connecting portion (7h), the ring-like insulating member being suitable to accomodate an electric wire extending through it for electrically connecting a power source to the second tip via the electric-wire connecting portion (7h).

5. A welding system comprising a welding torch according to any one of Claims 1 to 4, a power source (10) and a variable resistor (14), wherein one or both of the first and second tips are connected to the power source via the variable resistor.

6. A welding system comprising a welding torch according to any one of Claims 1 to 5, and a power source (10), wherein the power source includes a plurality of power sources (10A, 10B) and the first and second tips can be supplied with electric current from different power sources.

7. The welding system according to Claim 6,
wherein the different power sources include at least one pulse power source, and, if both of the power sources are pulse power sources, they are suitable for having, in operation, the pulsed electric current outputted from one power source synchronized with the timing of pulsed electric current outputted from the other power source.

8. The welding torch according to any one of Claims 1 to 4 or a welding system according to any one of claims 5-7, wherein the distance between the first and second tips can be adjusted by changing the lengths of the first and second tips (4, 8) or the lengths of the first and second tip bodies (5, 7).

## Patentansprüche

1. Schweißbrenner (1), umfassend:
einen Brennerkörper, der einen Drahtweg, durch welchen sich ein Schweißdraht entlang eines Achsenabschnitts erstrecken kann, einen Gasversorgungsweg, durch welchen Gas aus einer Gasquelle geliefert werden kann, und einen Stromversorgungsweg, durch welchen elektrischer Strom aus einer Stromquelle geliefert werden kann, hat;
eine Düse (3), die eine Gasausstoßöffnung (3b) an einem distalen Endabschnitt von ihr hat, durch welche Gas ausgestoßen werden kann, wobei der Brennerkörper an einem Basisendabschnitt der Düse montiert ist, der Schweißbrenner zum Ausstoß von Gas aus der Gasausstoßöffnung zum Schweißen eines Werkstücks unter Verwendung des Schweißdrahts geeignet ist;
einen ersten Spitzenkörper (5), der innerhalb der Düse (3) vorgesehen und mit dem Brennerkörper elektrisch verbunden ist, wobei der Schweißdraht, das Gas und der Strom durch den Brennerkörper an den ersten Spitzenkörper geliefert wird;
eine erste Spitze (4), die an einem distalen Ende des ersten Spitzenkörpers (5) vorgesehen ist, um den Strom, der den ersten Spitzenkörper durchlaufen hat, an den Schweißdraht zu liefern;
eine Isolierbuchse (22), die aus einem Isoliermaterial gebildet und an einem äußeren Umfang des ersten Spitzenkörpers innerhalb der Düse angeordnet ist;
einen zweiten Spitzenkörper (7), der den ersten Spitzenkörper (5) mit der Isolierbuchse (22) dazwischen eingefügt aufnimmt, wobei der zweite Spitzenkörper (7) mit elektrischem Strom aus der Stromquelle versorgt wird; und
eine zweite Spitze (8), die an einem distalen Ende des zweiten Spitzenkörpers vorgesehen ist, um den Strom, der den zweiten Spitzenkörper durchlaufen hat, an den Schweißdraht zu liefern, wobei die erste und zweite Spitze so konfiguriert sind, dass der Schweißdraht sich durch die erste Spitze hindurch erstrecken und durch die zweite Spitze eingeführt werden kann,
wobei die erste und zweite Spitze axial, in zwei Stufen, mit einem vorbestimmten Abstand voneinander angeordnet sind und den elektrischen Strom an den Schweißdraht liefern,
und wobei der zweite Spitzenkörper einen distalen Endabschnitt und einen Basisendabschnitt umfasst, die miteinander im Gewindeeingriffsind, **dadurch gekennzeichnet, dass** sich der im Gewindeeingriff (7i, 7j) des distalen Endabschnitts und des Basisendabschnitts an derselben axialen Position entlang der Länge des Schweißbrenners befinden, wie die erste Spitze, so dass sich die erste Spitze beim Entfernen des distalen Endabschnitts über den Gewindeeingriff hinaus erstreckt, wodurch Zugang zur ersten Spitze für einen Austausch von ihr bereitgestellt wird.

2. Schweißbrenner gemäß Anspruch 1,
wobei der erste Spitzenkörper einen ersten Hohlabschnitt (5b), durch den Gas strömt, das aus dem Brennerkörper strömt, und eine erste Kommunikationsöffnung (5c), die in einem äußeren Umfang des ersten Spitzenkörpers vorgesehen ist, um mit dem ersten Hohlabschnitt zu kommunizieren, hat,
wobei der zweite Spitzenkörper einen zweiten Hohlabschnitt (7b), durch den Gas strömt, das aus der ersten Kommunikationsöffnung strömt, und eine zweite Kommunikationsöffnung (7c), die in einem äußeren Umfang des zweiten Spitzenkörpers vorgesehen ist, um mit dem zweiten Hohlabschnitt zu kommunizieren, hat und
wobei ein dritter Gasstromweg (3a), der mit der zweiten Kommunikationsöffnung und der Gasausstoßöffnung kommuniziert, zwischen dem äußeren Umfang des zweiten Spitzenkörpers und einer Innenwand der Düse definiert ist.

3. Schweißbrenner gemäß Anspruch 2,
wobei die Isolierbuchse (22) einen Rohrabschnitt (22a), an dem ein Brennerinnenrohr, das elektrischen Strom an den ersten Spitzenkörper liefert, befestigt ist, und einen Isolierrohrabschnitt (22b) beinhaltet, an dem ein Buchseneinsatzabschnitt (7e), der am Basisendabschnitt des zweiten Spitzenkörpers gebildet ist, befestigt ist, und
wobei die Isolierbuchse am Brennerkörper vorgesehen ist.

4. Schweißbrenner gemäß einem der Ansprüche 1 bis 3, wobei der Schweißbrenner eine Durchführungsöffnung (3e) hat, an der ein ringähnliches Isolierelement (31) von der Außenseite der Düse im Innern befestigt ist, das aus einem Isoliermaterial gebildet ist,
der zweite Spitzenkörper einen Elektrodraht-Verbindungsabschnitt (7h) umfasst und das ringähnliche Isolierelement dazu geeignet ist, einen elektrischen Draht aufzunehmen, der sich durch dieses hindurch erstreckt, um über den Elektrodraht-Verbindungsabschnitt (7h) eine Stromquelle mit der zweiten Spitze elektrisch zu verbinden.

5. Schweißsystem, einen Schweißbrenner gemäß einem der Ansprüche 1 bis 4, eine Stromquelle (10) und einen variablen Widerstand (14) umfassend, wobei eine oder beide der ersten und zweiten Spitze über den variablen Widerstand mit der Stromquelle verbunden sind.

6. Schweißsystem, einen Schweißbrenner gemäß einem der Ansprüche 1 bis 5 und eine Stromquelle (10) umfassend, wobei die Stromquelle eine Vielzahl an Stromquellen (10A, 10B) beinhaltet und die erste und zweite Spitze aus unterschiedlichen Stromquellen mit elektrischem Strom versorgt werden können.

7. Schweißsystem gemäß Anspruch 6, wobei die unterschiedlichen Stromquellen mindestens eine Impulsstromquelle beinhalten und sie, falls beide der Stromquellen Impulsstromquellen sind, dafür geeignet sind, im Betrieb den elektrischen Impulsstrom aus einer Stromquelle mit dem Zeitverlauf des elektrischen Impulsstroms synchronisiert ausgeben zu lassen, der von der anderen Stromquelle ausgegeben wird.

8. Schweißbrenner gemäß einem der Ansprüche 1 bis 4 oder Schweißsystem gemäß einem der Ansprüche 5-7,
wobei der Abstand zwischen der ersten und zweiten Spitze durch Änderung der Längen der ersten und zweiten Spitze (4, 8) oder der Längen des ersten und zweiten Spitzenkörpers (5, 7) angepasst werden kann.

## Revendications

1. Chalumeau (1) comprenant :
un corps de chalumeau avec un trajet de fil par lequel passe un fil de soudage pouvant être déployé le long d'un axe, un chemin de fourniture de gaz par lequel une source de gaz peut être distribuée, et un chemin de distribution d'un courant par lequel un courant électrique provenant d'une source de courant peut être fourni ;
une buse (3) avec un orifice éjecteur de gaz (3b) sur une extrémité distale de celle-ci, par laquelle du gaz peut être refoulé, le corps du chalumeau étant monté sur une partie de socle de la buse, le chalumeau convenant pour décharger du gaz par l'orifice d'éjection de gaz pour souder une pièce à usiner à l'aide du fil de soudage ;
un premier corps d'embout (5) placé à l'intérieur de la buse (3), et raccordé électriquement au corps du chalumeau, le fil de soudage, le gaz, et ledit courant étant amenés au premier corps d'embout à travers le corps du chalumeau ;
un premier embout (4) placé sur une extrémité distale du premier corps d'embout (5) assurant la fourniture au fil de soudage du courant ayant traversé le premier corps d'embout ;
un coussinet isolant (22) composé d'un matériau isolant, et placé sur un pourtour extérieur du premier corps d'embout à l'intérieur de la buse ;
un deuxième corps d'embout (7) contenant le premier corps d'embout (5), le coussinet isolant (22) étant intercalé entre eux, le deuxième corps d'embout (7) étant alimenté par un courant électrique provenant de la source d'alimentation ; et
un deuxième embout (8) placé sur une extrémité distale du deuxième corps d'embout pour apporter, au fil de soudage, le courant qui est passé par le deuxième corps d'embout, les premier et deuxième embouts étant configurés de sorte que le fil de soudage puisse être déployé à travers le premier embout et être inséré à travers le deuxième embout,
les premier et deuxième embouts étant agencés axialement, en deux étages, à une distance prédéterminée l'un de l'autre et apportant un courant électrique au fil de soudage,
et le deuxième corps d'embout comprenant une partie d'extrémité distale et une partie de socle de la buse engagées par filetage l'une avec l'autre, **caractérisées en ce que** l'engagement fileté (7i, 7j) de la partie d'extrémité distale et la partie de socle se trouvent au même emplacement axial sur la longueur du chalumeau que le premier embout, de sorte que lorsque l'on enlève la partie d'extrémité distale, le premier embout se déploie au-delà de l'engagement fileté, en permettant ainsi d'accéder au premier embout pour son remplacement.

2. Chalumeau selon la revendication 1,
le premier corps d'embout comprenant une première partie creuse (5b) par laquelle s'écoule du gaz refoulé par le corps du chalumeau, et un premier orifice de communication (5c) pratiqué dans un pourtour extérieur du premier corps d'embout de façon à pouvoir communiquer avec la première partie creuse,
le deuxième corps d'embout possédant une deuxième partie creuse (7b) à travers laquelle du gaz s'écoulant hors du premier orifice de communication s'écoule, et un deuxième orifice de communication (7c) pratiqué dans un pourtour extérieur du deuxième corps d'embout de façon à pouvoir communiquer avec la deuxième partie creuse, et
un troisième chemin d'écoulement (3a) communiquant avec le deuxième orifice de communication, et l'orifice éjecteur de gaz étant défini entre le pourtour extérieur du deuxième corps d'embout et une paroi interne de l'embout.

3. Chalumeau selon la revendication 2, le coussinet isolant (22) comprenant une partie tubulaire (22a) sur laquelle est monté un tube intérieur du chalumeau apportant un courant électrique au premier corps d'embout, et une partie tubulaire isolante (22b) sur laquelle est montée une partie d'insertion du coussinet (7e) formée sur une partie de socle du deuxième corps d'embout, et
le coussinet isolant étant placé sur le corps du chalumeau.

4. Chalumeau selon une quelconque des revendications 1 à 3, le chalumeau possédant un trou traversant (3e) sur lequel un élément isolant annulaire (31), réalisé avec un matériau isolant, est monté à l'intérieur depuis l'extérieur de l'embout,
le deuxième corps d'embout comprenant une partie de raccordement de fil électrique (7h), l'élément isolant annulaire étant approprié pour recevoir un fil électrique le traversant afin d'assurer le raccordement d'une source d'alimentation électrique au deuxième embout par le biais de la partie de raccordement de fil électrique (7h).

5. Système de soudage comprenant un chalumeau selon une quelconque des revendications 1 à 4, une source d'alimentation (10) et une résistance variable (14), un des premier et deuxième embouts, ou les deux, étant connectés à la source d'alimentation par le biais de la résistance variable.

6. Système de soudage comprenant un chalumeau selon une quelconque des revendications 1 à 5, une source d'alimentation (10), la source d'alimentation comprenant une pluralité de sources d'alimentation (10A, 10B), et les premier et deuxième embouts pouvant recevoir un courant électrique de différentes sources d'alimentation.

7. Système de soudage selon la revendication 6, les différentes sources d'alimentation comprenant au moins une source d'alimentation pulsée, et, si les deux sources d'alimentation sont des sources d'alimentation pulsée, elles sont appropriées pour qu'en cours d'utilisation le courant électrique pulsé provenant d'une source d'alimentation soit synchronisé avec la temporisation d'un courant électrique pulsé produit par l'autre source d'alimentation.

8. Chalumeau selon une quelconque des revendications 1 à 4, ou système de soudage selon une quelconque des revendications 5-7,
la distance entre les premier et deuxième embouts pouvant être ajustée en modifiant la longueur des premier et deuxième embouts (4, 8) ou la longueur des premier et deuxième corps d'embout (5, 7).
